# EUROPEAN PATENT APPLICATION

(11) **EP 0 783 942 A1**
(43) Date of publication of application: **16.07.1997**
(21) Application number: 97850001.5
(22) Date of filing: 09.01.1997
(51) Int. Cl.: B26D 7/26, B23D 35/00

(54) **Slitter for strips**

(30) Priority: 12.01.1996 SE 9600098; 13.05.1996 SE 9601839
(71) Applicant: AKV-ORTIC AB, 714 31 Kopparberg (SE)
(72) Inventor: Söderund, Stig, 71431 Kopparberg (SE); Rönngren, Jan, 77160 Ludvika (SE)
(74) Representative: Brinck, Curt Edvard

(57) **Abstract**

The invention relates to a cutter assembling means for slitting of coils of relatively large width to one coil of desired width or to several coils. The material for slitting is favourable made of metal, for example steel and aluminum, but coils of other material can be used. The invention is directed to make a very strong and stable slitting means, having a minimum of plays in order be able to slit steel coils from a thickness up to 15 mm, also coils of aluminum having a thicknes of at least 0,1 mm.

## Description

This invention relates to a cutter assembling means for slitting of material coils of relatively large width to one coil of

desired width or to several coils. The coil for slitting is favorably made of metal, for example steel and aluminum, but coils of other material can be used. The invention is useful for strong and thick material but also for weak and soft material.

Slitting of coils of large width to one or several coils of desired width, often in connection with edge cutting is favorably performed in a cutter assembling means. Such means are described for instance in US-A-4183273 and EP 0 444 047 B1. The strip is directed in between two arbors equipped with dish shaped cutters and spacers. The arbors are mutually parallel disposed above each other and joined in bearings to two frame portions. In one end of the slitter is a driving means for rotating the arbors.

There is a favour to be able to have the other end of the arbors free. In this way it will be very easy reassembling and assembing the cutters and spacers when changing the material for slitting and changing the width of the desired strips. The sets of cutters and spacers are when reassembled pushed over to other arbors, docked to the ends of the arbors on the slitter. In the same way new sets of cutters and spacers are pushed over to the arbors of the slitter.

To lay the ends of the arbors free, one of the frame portions is revolving disposed sideways round a vertical shaft. But this means is often too weak. When slitting it will sometimes be forces, that is not directed in an imaginary plane through the longitudinal center lines of the two arbors. These forces will tilt the movable frame portion. The slitting operation will therefore not be sufficiently good.

Sets of cutters and spacers are fixed to the arbors in that a hydraulic piston, adapted on the movable frame portion, force the sets against a fixed ring round the periphery in the end of the arbor. That will naturally cause, that the co-operating frame portions will be bent away from each other and the forces on the trust bearings, placed on the frame portion, will increase. The best way is surely to keep the forces within the arbors in question.

When slitting, where you carry out even numbers of cuts, the axial forces will be in balance. But by uneven cuts it will be forces, that are not i balance. In this case axial forces will increase in the trust bearing of the arbors.

When slitting the deflection of the arbors may not be allowed to be too big. In that case the edges of strips will not be sufficiently good, especially depending on that the plane surfaces of the cutters will be oblige angled in relation to each other. That will also cause that the edges will graze against each other . The edges will be damaged.

By common mounting of bearing on the arbors it is generally believed, that the arbors will be, from the bending point of view, freely flitted to the frame portions. If you were able to fit the arbors in the frame portions in that way that you could find them really fixed from the bending point of view the bending of the arbors will decrease to one fifth.

To get an acceptable overlaying of the cutter edges between the over and under arbors the distance between the cutter edges respectively must be adjustable. The change of distance will be performed by moving one or both of the cooperating arbors vertically. The resilience will make that it will be difficult to adjust the distance and also keep the correct distance.

Surprisingly it has appeared a way to make a slitter for strips and for sheets, where you are successfully able to slit for instance stainless steel having a thickness of up to 15 mm, also coils of aluminum having a thickness down to 0.1 mm. The invention will be described more precisely in the enclosed claims. An application according to the invention will be disclosed in more details below with reference to the accompanying drawings where
- Fig. 1: is a side view of a slitter and

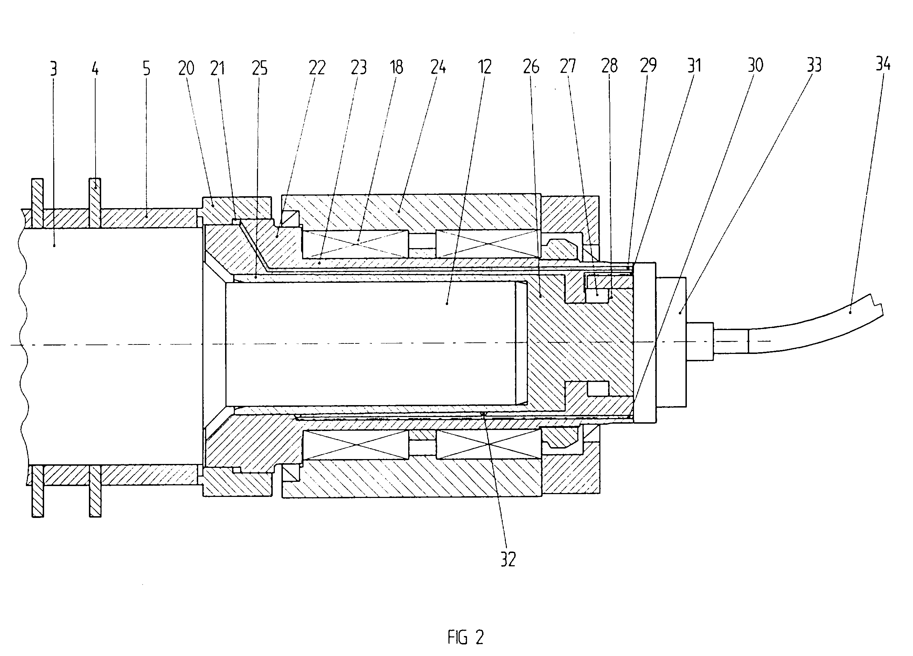

- Fig. 2: is a longitudinal section throught the bearing of the arbors fixed to the movable frame portion.

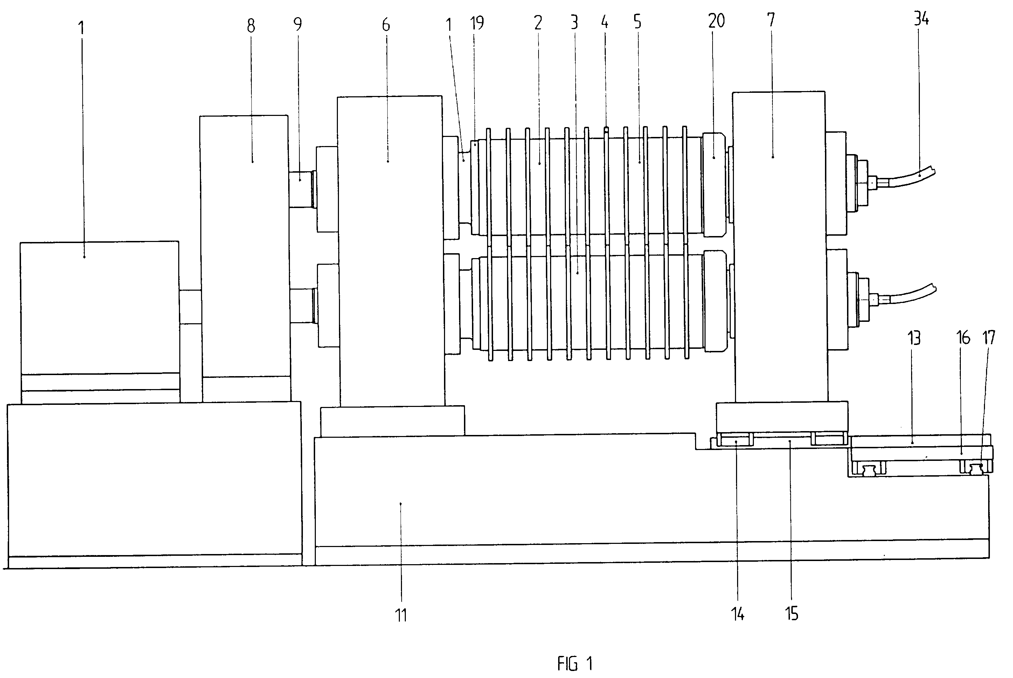

A slitter, fig. 1, is used where slitting is executed between two arbors, 2, 3. The arbors, 2, 3, are equipped with cutters, 4, and intermediate spacers ,5. The width of the spacers, 5, corresponds to the width of the desired strips.

The arbors , 2, 3, are fixed in the ends to two frame portions ,6,7. The driving of these arbors ,2,3, is made driving means containing a driving unit , 1, a gear reduction set, 8, and two universal driving shafts or Schmidt-engagements ,9, that are joined to the corresponding ends of the arbors, 2,3. To get an extremely good stability the two frame portions, 6,7, of the slitters are advantageously joined together on the same base plate, 11. One of the frame portion ,6, will be quite stiff fixed to the base plate ,11. The other frame portion ,7, must be movable to expose the non driven end ,10, of the arbors ,2,3. It will make it easy to change the sets of cutters ,4, and spacers ,5. One movement is made in a direction parallel to the center line of the arbors ,2,3, to lay the ends of the arbors quite free. The following movement is made perpendicular to the previous movement. The movable frame portion ,7, is placed on two parallel guide rails, 13, that in turn are fixed to the plate, 11. The two parallel rail guides , 13, shall be mounted parallel to the center lines of the arbors 2,3, and in distance from each other. To get increased stability it will be very god to part them as much as possible. The top parts of the rail guides ,13, are fixed to the under side of the frame portion ,7. The play in the rail guides ,13, and the friction is negligible. The top part , 14, of the guide rail is namely parted from the bottom part, 15, by spheres. The transverse movement is made in the same way. After the front portion ,7, has been moved away from its ordinary place as far as the ends of the arbors are quite free it has a the same time entered a sledge ,16, that is movable perpendicular to the previous movement as far as it will be possible to dock a movable carriage to the ends of the arbors ,2,3. The sledge, 16, is in turn movable on rail guides, 17, that are fixed to the bottom plate, 11.

Usually the change of sets ,4,5, will be made by help of any kind of carriage. The carriage is movable in the direction of the center lines of the arbors ,2,3. To the carriage is fixed a vertical, turning post. To this are fixed in pair above each other a number of arbors in different directions. When changing of sets ,4,5, these must get free from the arbors ,4,5, the movable frame portion, 7, is moved backwards and then sideways. The carriage is docked to the free ends ,10, of the arbors, 2,3. The sets ,4,5, are pushed over to the carriage. Another pair of arbors, equipped with new sets ,4,5, are docked to the slitter and pushed onto the arbors ,4,5.

Bringing the arbors , 2, 3, together to the frame portions 6,7, is aimed to get the play as smal as possible both in radial and axial direction. The best way is to use paired bearings , 18. That means that two or more roller bearings are especially selected and tested to work together very good and with small play. It will also be favourable to increase bending resistance of the arbors 2,3 by hard clamping them to the bearing housings ,24. That will be done by not allowing any tending insides the bearing housing , 24. Pratically it will be made using at least two paired bearings , 18, side by side. By extremely bad circumstances it is a favour to part them away a distance of at least one width of the used bearings , 18. From this point of view and of other circumstances as will be shown below, the shafts , 12, may be cylindrical.

The vertical position of at least one of the arbors 2, 3, must be adjustable to adjust the overlapping of the edges. The bearing housings ,24, of the adjustable arbors , 2,3, are guided by guides in the oblong windows of the frame portions ,6,7. Vertical rail guides are fitted to the vertical insides of the windows. The vertical position will continously be adjusted by hydraulic jacks below the bearinig housings ,24. They get the hydraulic power from a servomotor, that is adjusted by a microcomputer, getting impulses from level indicators.

It is very imported to make all parts of the slitter very stiff. For this reason it is favorable to use rail guides mounted at the four vertical edges of the oblong window.

The set ,4,5, is fit to the arbor ,2,3, between a fixed ring ,19, and a movable hydraulic trust ring ,20. The fixed ring ,19, is seated at the driving end, 9, of the arbor ,2,3.

The trust ring , 20, is axially movable and is similar to the outer cylinder of a jack. The piston ,21, of the jack is movable compared to the trust ring, 20. The piston , 21 , is a part of a collar , 22 , on a moreover cylindric sleeve , 23. The sleeve , 23, is movable and located on a holllow arbor ,25 , on the shaft ,12, of the arbor ,2,3.

The roller bearings, 18, are fit to the mantle of the sleeve ,23. The bearings ,18, are joined to the movable frame portion ,6,7, by bearing housings. Between the sleeve ,23, and the cylindric shaft , 12 , of the arbor ,2, 3, is located a hollow arbor, 25, that is a sleeve with an end part ,26, in the gable side. In this part ,26, is located a hydraulic piston, 27. In the center of the hollow arbor, 25, is a centric cavity. The bore diameter shall with slip fit match the diameter of the shaft ,12. The outer surface of the hollow arbor , 25, is smaller tapered to a less diameter in the end part , 26. The inner surface of the sleeve ,23, is adjusted to be in contact to the outer surface of the hollow arbor , 25, but also allow some pushing up on the hollow arbor ,25. The pushing up of the sleeve ,25, is limited to the piston stroke of the hydraulic piston ,27, or of a fixed lip. The pushing up movement will also initiate a force between the shaft , 12, and the sleeve , 23. The location of bearings, 18, will also be at the same place on the arbor ,2,3.

From the end part ,26, of the hollow arbor ,25, are drilled three holes ,29-31, in axial directions. The first one , 29, is led to the trust ring, 20. It is also connected to a spring-loaded accumulator (not shown) to prevent fall of pressure depending on leakage. The second hole ,30, is connected to ring-shaped cut-in portions ,32, in the inner surface of the sleeve ,23. The third hole ,31, is connected to the hydraulic piston, 27, located at the end part , 26, of the hollow arbor, 25. All three holes , 29-31, are also separately connected to a turnable hydraulic oil connection ,33. The hydraulic oil is led to this connection from a force pump (not shown) by a flexible tube ,34.

In this way the clamping of the set ,4,5, is kept within the arbor, 2,3, and no influence on the axial bearing occurs.

Another advantage of this process to fix connect the arbors , 2, 3, to the bearing housing, 24, and to fix connect the bearing housings , 24, to the frame portions , 6,7, is building up a very stiff frame structure of the arbors ,2, 3, the frame portion and the base plate, 11.

It is advisable to make the change of the sets , 4, 5, in the following way :
1. The hydraulic pressure to the trust ring ,20, is discharged to zero.
2. The hydraulic pressue to the hydraulic piston ,27, is increased a little to block the sleeve ,23, up on the shaft , 12,
3. The hydraulic pressure is increased to the cut-in portions ,32, to get an oil film between the hollow piston, 25, and the sleeve ,23.
4. The pressure in the hydraulic piston ,27, is gradually reduced until the sleeve , 23, is loose from the hollow arbor, 25. The hydraulic pressure to the cut-in portion , 33, is unloaded.
   The movable frame portion ,7, is now free to be moved back-ward and sideways. The sets ,4, 5, are now also free to be moved backward and away from the arbors , 2,3.
   New sets, 4, 5, are pushed onto the arbors , 2, 3.
5. The movable frame portion, 7, is turned and put in position.
6. The hydraulic pressure is increased in the cut-in portions , 23. An oil film will diverge between the hollow arbor , 25, and the sleeve ,23.
7. The hydraulic pressure is increased in the hydraulic piston ,27 , and the sleeve, 23, is moved onto the hollow arbor, 25.
8. The hydraulic pressure to the cut-in portions ,32, will be unloaded. Now a stiff clamping will be obtained between the sleeve , 23 , the hollow arbor ,25, and the shaft ,12.

It is now possible to restart a slitting operation.

All this above mentioned movements are able to execute from a central control panel or by a computer.

## Claims

1. A slitter for strips,
comprising two frame portions (6,7),
two parallel arbors (2,3) extending between the frame portions (6, 7),
one of the frame portions (6) comprising driving means, 1, for rotating the arbors (2,3),
the opposite frame portion (7) being movable to permit sets (4,5) of cutters (4) and spacers (5) to be assembled and dis-assembled on each arbor (2,3),
**characterized in that**
a hollow arbor (25), whose outside diameter is a little tapeed, is with slip fit pushed onto the cylindrical shaft (12) of the arbor (2,3),
a sleeve (23) fit with a collar (22), on the outside diameter have bearings for joining the arbors (2,3) to the movable frame portion (7) and whose inner surface has the same tapering as the outer surface of the hollow arbor (25) and by pressing it onto the hollow arbor (25) will clamp it and at the same time clamp the hollow arbor (25) with the shaft (12) of the arbor (2,3)
and a movable hydraulic trust ring (20), is fit to the collar (22) for pressing the sets (4,5) of cutters (4) and spacers (5) together between this trust ring (20) and a fixed ring (19) on the opposite side of the arbor (2,3).

2. A slitter according to claim 1
**characterized in that**
a hydraulic piston (27) is centrally fit to the end part (26) of the hollow arbor (25) and with hydraulic pressure is able to move the sleeve (23) onto the hollow arbor (25).

3. A slitter according to claim 1
**characterized in that**
joining of the arbors (2,3) to the frame portions (7) is made by help of at least two paired bearings ,18, side by side.

4. A slitter according to claim 3
**characterized in that**
the distance between the bearings (18) is at least the axial width of the used bearings (18).

5. A slitter according to any of the preceding claims
**characterized in that**
the movable frame portion (7) is pushed away from the end shafts (12) of the arbors (2,3) on at least two horizontal rail guides (13).

6. A slitter according to claim 5
**characterized in that**
the movable frame portion (7) is pushed sideways on other horizontal rail guides (17) after that the frame portion has been moved quite away from the ends of arbors (2,3).

7. A slitter according to any of the preceding claims.
**characterized in that**
the bearing housings (24) on the arbors (2,3) are guided up and down by vertical guide rails, fit to the vertical opposite surfaces inside the frame portions (6,7), near the vertical edges of the surfaces.

8. A slitter according to any of the preceding claims
**characterized in that**
the vertical position of the arbors (2,3) are continuos adjusted by hydraulic jacks.

9. A slitter according to claim 8
**characterized in that**
the hydraulic jack gets is power from a microcomputer adjustabeled servomotor that gets impulses from level indicators.
